# EUROPÄISCHE PATENTSCHRIFT

(11) **EP 0 828 774 B1**
(45) Veröffentlichungstag und Bekanntmachung des Hinweises auf die Patenterteilung: **11.08.1999**
(21) Anmeldenummer: 96914062.3
(22) Anmeldetag: 09.05.1996
(51) Int. Cl.: C08G 18/00, C08G 18/16, C08G 59/62

(54) **EPOXIDHARZFORMMASSEN MIT HALOGENFREIEM FLAMMSCHUTZ**
EPOXY RESIN MOULDING MATERIALS FIRE-PROOFED WITHOUT HALOGENS
MATIERES MOULABLES EN RESINE EPOXYDE IGNIFUGEES SANS HALOGENES

(30) Priorität: 24.05.1995 DE 19519239
(43) Veröffentlichungstag der Anmeldung: 18.03.1998
(73) Patentinhaber: SIEMENS AKTIENGESELLSCHAFT, 80333 München (DE)
(72) Erfinder: VON GENTZKOW, Wolfgang, D-91077 Kleinsendelbach (DE); KRETZSCHMAR, Klaus, D-91054 Erlangen (DE); SCHREYER, Michael, D-91085 Weisendorf (DE); DONNER, Peter, D-91334 Hemhofen (DE)
(86) Internationale Anmeldenummer: DE9600808
(87) Internationale Veröffentlichungsnummer: WO9637532

(56) Entgegenhaltungen:
- WO-A-90/15089
- DE-A- 2 025 992
- DE-A- 4 223 632
- FR-A- 2 335 542
- US-A- 4 973 631
- DATABASE WPI Week 8917 1989 Derwent Publications Ltd., London, GB; AN 89-126740 XP002010778 "SEAL SEMI-CONDUCTOR DEVICE" & JP,A,01 073 651 (NITTO ELECTRIC) , 17.März 1989 in der Anmeldung erwähnt
- DATABASE WPI Week 9007 1990 Derwent Publications Ltd., London, GB; AN 90-048171 XP002010779 "RESIN SEAL TYPE SEMICONDUCTOR" & JP,A,02 001 149 (TOSHIBA) , 5.Januar 1990
- DATABASE WPI Week 8847 Derwent Publications Ltd., London, GB; AN 88-333625 XP002010780 "SEMICONDUCTOR DEVICE SEAL" & JP,A,63 245 947 (NITTO ELECTRIC) , 13.Oktober 1988
- DATABASE WPI Week 7905 Derwent Publications Ltd., London, GB; AN 79-08883B XP002010781 "ELECTRIC INSULATE CONDUCTOR" & JP,A,53 144 938 (HITACHI) , 16.Dezember 1978
- DATABASE WPI Week 9121 Derwent Publications Ltd., London, GB; AN 91-152232 XP002010782 "SUPPRESS PROCESS INCREASE POLYEPOXIDE RESIN VISCOSITY" & JP,A,03 086 752 (MITSUBISHI GAS CHEM) , 11.April 1991

## Beschreibung

Die Erfindung betrifft flammwidrig eingestellte, rieselfähige, latent reaktive, phenolisch härtbare Epoxidharzformmassen zur Umhüllung von elektronischen Bauelementen.

In der Elektronik werden zur Umhüllung von aktiven und passiven Bauelementen füllstoffhaltige Formmassen auf der Basis von Epoxidharzen verwendet. Beispiele für derartige Anwendungen sind die Umhüllung von Kondensatoren, Dioden, Transistoren, Leistungshalbleitern, Optokopplern, Speicherchips und Mikroprozessoren. Für diesen Zweck geeignete Epoxidharzformmassen müssen hohe Anforderungen an die Verarbeitungs- und Formstoffeigenschaften erfüllen. Dies betrifft insbesondere die Reinheit der Formmassen sowie das rheologische Verhalten und die Hartungseigenschaften bei der Verarbeitung als Transferpreßmassen mittels Spritz-Preß-Verfahren und ferner die mechanisch-thermischen Eigenschaften der Epoxidharzformstoffe und den langzeitstabilen Schutz der Bauelemente gegen aggressive Umgebungseinflüsse. Außerdem müssen die Epoxidharzformstoffe die hohen Forderungen der Elektronik an das flammwidrige Verhalten erfüllen und - bei der international üblichen Brennbarkeitsprüfung nach UL 94 V - die Einstufung V-0 bei einer Schichtstärke ≤ 1,6 mm erreichen.

Die Härtung von Epoxidharzformmassen kann grundsätzlich mit chemisch unterschiedlichen Härterkomponenten durchgeführt werden, beispielsweise mit Carbonsäureanhydriden, Aminen oder Phenolen. Zur Umhüllung von elektronischen Bauelementen mittels Spritz-Preß-Verfahren haben sich jedoch mit Quarzgutmehl hochgefüllte, phenolisch härtbare Epoxidharz-Transferpreßmassen durchgesetzt.

Die heutzutage im technischen Einsatz befindlichen phenolisch härtbaren Epoxidharz-Transferpreßmassen enthalten in der Regel 10 bis 30 % organische und 70 bis 90 % anorganische Komponenten. Die chemische Basis der Harzkomponenten besteht in den meisten Fällen aus Kresolnovolak-Epoxidharzen. Zur Hartung der Epoxidharze werden überwiegend Phenolnovolake verwendet; die Reaktionsbeschleunigung erfolgt beispielsweise mit Triphenylphosphin, Phenylphosphoniumborat und 2-Ethyl-4-methylimidazol, Zur Verbesserung des Low-stress-Verhaltens werden in den Formmassen siliconmodifizierte Epoxidharzkomponenten eingesetzt (siehe dazu: DE-OS 42 23 632).

Die flammwidrige Einstellung der Preßmassen erfolgt mit aromatischen Bromverbindungen, insbesondere mit Tetrabrombisphenol-A-Epoxidharzen, die bei der Härtung chemisch in den Epoxidharzformstoff eingebaut werden. Zusätzlich erhöht Antimontrioxid als Synergist die Wirksamkeit der bromierten Flammschutzmittel. Die flammwidrigen Eigenschaften der Epoxidharzformstoffe werden weiter durch einen hohen Gehalt an silanisierten Quarzgutfüllstoffen unterstützt; verwendet werden dabei sowohl splittrige Füllstoffe als auch Mischungen aus splittrigen und sphärischen Füllstoffen. Neuerdings werden zur Vermeidung von sogenannten weichen Ausfällen (soft errors) bei hochintegrierten Schaltungen synthetisch hergestellte α-strahlungsfreie Quarzgutfüllstoffe verwendet. Der hohe Gehalt an silanisiertem Quarzgutfüllstoff dient auch zur Verbesserung der mechanisch-thermischen Eigenschaften der Epoxidharzformstoffe, insbesondere zur Einstellung des Ausdehnungskoeffizienten. Die Preßmassen enthalten auch noch geringe Mengen an Additiven, insbesondere Ruß, und Verarbeitungshilfen, wie Stearate und Wachse.

Zur Herstellung der phenolisch härtbaren Epoxidharz-Transferpreßmassen werden die Harz- und Harterkomponenten in der Regel bei Temperaturen bis ca. 120°C, insbesondere durch Kneten auf einem Walzenstuhl oder durch Extrusion, beispielsweise mittels eines Schneckenkneters, in einen vorreagierten Zustand (B-stage) überführt und pulverisiert. Zur Verarbeitung der Transferpreßmassen mittels Spritz-Preß-Verfahren wird das Preßmassenpulver meist tablettiert, und gegebenenfalls werden die Tabletten vor der Verarbeitung auf 70 bis 90°C vorgewärmt. Die Umhüllung der Bauelemente erfolgt im allgemeinen bei Formtemperaturen von 170 bis 190°C und einem Druck von 70 bis 200 bar, wobei die Preßmasse in der Form meist 60 bis 120 s lang gehärtet wird. Anschließend werden die Bauelemente entformt und gegebenenfalls bei Temperaturen von 170 bis 190°C nachgehärtet.

Die mit bromhaltigen Flammschutzmitteln und Antimontrioxid flammwidrig eingestellten, phenolisch härtbaren Epoxidharzformmassen, die hervorragende flammhemmende Eigenschaften besitzen, haben sich in der Elektronik zwar bewährt, ihr Einsatz ist allerdings nicht unproblematisch. Bei Brand und Verschwelung bilden sie nämlich hochkorrosive Bromverbindungen, wie Bromwasserstoff, und biologisch schwer abbaubare aromatische Bromverbindungen, wie Polybromdibenzodioxine und Polybromdibenzofurane. Außerdem sind Epoxidharzformstoffe, die bromierte Flammschutzmittel enthalten, für ein Recycling nicht geeignet, wenn eine weitere Streuung von gefährlichen Produkten vermieden werden soll. Darüber hinaus kann zukünftig die Entsorgung solcher Epoxidharzformstoffe durch Verbrennung, wegen der weiter steigenden Auflagen zur Luftreinhaltung, nur als Sondermüll mit technisch aufwendigen und wirtschaftlich unrentablen Verbrennungsverfahren durchgeführt werden. Gegen den Einsatz von Antimontrioxid spricht, daß diese Verbindung auf der Liste der krebserzeugenden Gefahrstoffe steht. Eine Gefährdung ist zwar bei dauerhafter Einbindung, wie sie in der gehärteten Preßmasse gegeben ist, vernachlässigbar, zur Herstellung antimontrioxidhaltiger Preßmassen sind aber aufwendige arbeitshygienische Schutzmaßnahmen erforderlich. Außerdem stellt Antimontrioxid, das bei der Verarbeitung, d.h. bei der Umhüllung von elektronischen Bauelementen, aber auch im Brand- oder Verschwelungsfall bzw. bei Recyclingverfahren freigesetzt wird, in Form von atembarem Staub ein hohes Risiko dar.

Es sind auch bereits Arbeiten zur flammwidrigen Einstellung von Preßmassen ohne die Verwendung von halogenhaltigen Flammschutzmitteln durchgeführt worden. Dazu ist aus der DE-OS 42 23 632 eine latent reaktive, phenolisch härtbare Epoxidharzformmasse ohne halogenhaltigen Flammschutz bekannt, bei deren Herstellung folgendermaßen vorgegangen wird. Zunächst wird aus einer Füllstoff enthaltenden, thermisch polymerisierbaren Reaktionsharzmischung von Polyepoxidharz EP (Mischung von di- und mehrfunktionellen Epoxidharzen) und Polyisocyanatharz IC (Molverhältnis EP:IC > 1) unter Verwendung von substituiertem Imidazol als Reaktionsbeschleuniger (Konzentration: 0,5 bis 2,5 %, bezogen auf EP) bei Reaktionstemperaturen bis 200°C eine isocyanatgruppenfreie, latent reaktive prepolymere Epoxidharzmischung in Pulverform hergestellt. Diese Epoxidharzmischung wird dann mit einer pulverförmigen, Füllstoff enthaltenden Phenolharzmischung (Molverhältnis von Epoxidgruppen zu phenolischen Hydroxylgruppen: 1:0,4 bis 1:1,1) vermischt, gegebenenfalls unter Zusatz von Additiven.

Nachteilig bei diesem Verfahren ist, daß bei der Herstellung der prepolymeren Epoxidharzmischung, die beispielsweise mittels eines kontinuierlich arbeitenden Reaktors erfolgt (siehe dazu DE-OS 42 23 622), hohe Gehalte an Füllstoff erforderlich sind, um die Reaktionsharzmischung zu "verdünnen", d.h. deren Reaktivität zu vermindern, und die bei der Reaktion des Polyepoxidharzes mit dem Polyisocyanatharz freiwerdende Reaktionswärme ausreichend schnell abführen zu können. Ohne das Vorhandensein von Füllstoff führt nämlich die spontan einsetzende hohe Wärmeentwicklung zur Zersetzung des Materials. Der hohe Füllstoffgehalt schränkt aber die Variationsbreite bei der technischen Herstellung der prepolymeren Epoxidharzmischung - und damit auch der Epoxidharzformmasse - stark ein, da jede Anpassung der Rezeptur an die Verarbeitungs- und Formstoffeigenschaften bereits bei der Zusammensetzung der Reaktionsharzmischung (aus Polyepoxid- und Polyisocyanatharz) festgelegt werden muß. Dann ist aber eine rasche und flexible Anpassung an den jeweiligen Einsatzzweck der Formstoffe nicht möglich.

Aufgabe der Erfindung ist es, kostengünstig zugängliche Epoxidharzformmassen mit einer Epoxidharzkomponente und einer Härterkomponente anzugeben, die vergleichbar den im technischen Einsatz befindlichen Epoxidharzpreßmassen verarbeitet werden können, für die Umhüllung elektronischer Bauelemente geeignet sind und ohne Antimontrioxid und/oder Halogenverbindungen schwerbrennbare, d.h. nach UL 94 V-0 einstufbare Formstoffe ergeben, wobei die Epoxidharzkomponente in wirtschaftlicher Weise aus Polyepoxidharz und Polyisocyanatharz ohne Zusatz von Füllstoff erhältlich sein muß.

Dies wird erfindungsgemäß dadurch erreicht, daß die Epoxidharzformmassen folgende Komponenten enthalten:
- eine Epoxidharzkomponente, erhalten aus einer lösungsmittelfreien Reaktionsharzmischung von Polyepoxidharz und Polyisocyanatharz mit einem Molverhältnis der Epoxidgruppen zu den Isocyanatgruppen von 1,1:1 bis 4:1 bei einer Reaktionstemperatur bis zu 220°C in Gegenwart eines Reaktionsbeschleunigers in einer Konzentration von 0,5 bis 2,5 % und unter Verwendung von Triphenylphosphinoxid in einer Konzentration von 0,05 bis 10 %, jeweils bezogen auf die Reaktionsharzmischung
- eine Härterkomponente mit mindestens zwei phenolischen Hydroxylgruppen pro Molekül
- anorganischen Füllstoff
- und übliche Zusatzstoffe.

Es wurde nämlich überraschenderweise gefunden, daß die unter Verwendung eines Reaktionsbeschleunigers erfolgende chemische Umsetzung der Reaktionsharzmischung, d.h. des Gemisches von Polyepoxidharz mit Polyisocyanatharz, in Gegenwart von Triphenylphosphinoxid verzögert wird und damit steuerbar ist. Dies bedeutet aber, daß diese Umsetzung auch in Abwesenheit von Füllstoff (und ohne Lösungsmittel) erfolgreich durchgeführt werden kann. Darüber hinaus wird das Eigenschaftsspektrum von Formstoffen aus phenolisch gehärteten Epoxidformmassen, die eine Epoxidharzkomponente der genannten Art enthalten und bei denen der Füllstoff erst bei der endgültigen Formulierung zugesetzt wird, durch die Zugabe von Triphenylphosphinoxid nicht beeinträchtigt.

Es wurde zwar bereits vorgeschlagen, Triphenylphosphinoxid als Additiv zur flammwidrigen Einstellung von Preßmassen auf der Basis phenolisch härtbarer Kresolnovolakepoxidharze einzusetzen. Die Wirkung von Triphenylphosphinoxid als alleiniger Flammhemmer ist offenbar aber sehr gering. Es werden nämlich entweder sehr hohe Konzentrationen an Triphenylphosphinoxid benötigt, beispielsweise 8 Masseteile Triphenylphosphinoxid in 110 Masseteilen Preßmasse, entsprechend ca. 7,2 % (JP-OS 61-127748), oder das Triphenylphosphinoxid muß mit einem hydratisierten Metalloxid, wie Antimonpentoxid-Hydrat, als Synergist kombiniert werden (JP-OS 01-073651). Darüber hinaus wird dem Triphenylphosphinoxid eine beschleunigende Wirkung auf die Vernetzung von Epoxidharzen mit Phenolharzen zugeschrieben (JP-OS 01-073651).

Aus der WO 90/15089 sind epoxyterminierte Polyoxazolidinone (dort vereinfacht als Polyoxazolidone bezeichnet) bekannt, die - ohne hohe Füllstoffkonzentrationen - aus Reaktionsharzmischungen von Polyepoxidharzen und Polyisocyanatharzen bei Temperaturen zwischen 110 und 200°C hergestellt werden; dabei wird das Polyisocyanatharz dem beschleunigerhaltigen Polyepoxidharz zudosiert. Bei einem derartigen Prozeß ist jedoch keine kontinuierliche Arbeitsweise möglich, und außerdem erfordern die verwendeten geringen Beschleunigerkonzentrationen (zwischen 0,01 und 2 %, bezogen auf das Gemisch aus Polyepoxid- und Polyisocyanatharz) sehr lange und damit unwirtschaftliche Reaktionszeiten. Bei hohen Beschleunigerkonzentrationen und den für die Reaktion erforderlichen hohen Temperaturen dagegen vernetzt das Polyepoxidharz bereits vor und während der Zugabe des Polyisocyanatharzes zu einem unlöslichen, nicht-schmelzbaren und damit unbrauchbaren Produkt. Die in der genannten Weise erhaltenen epoxyterminierten Polyoxazolidinone dienen - als Epoxidharzkomponenten - ausschließlich zur Herstellung von Prepregs und Laminaten aus lösungsmittelhaltigen Mischungen mit aminischen oder phenolischen Härterkomponenten. Zur flammwidrigen Einstellung wird Tetrabrombisphenol-A verwendet.

Die Epoxidharzkomponente der Epoxidharzformmassen nach der Erfindung ist oder enthält ein Prepolymer mit stickstoffheterocyclischen Oxazolidinon- und Isocyanuratstrukturen. Die Verwendung von Triphenylphosphinoxid in derartigen Epoxidharzkomponenten bzw. -formmassen ist bislang aber nicht bekannt. Der Gehalt der Formmassen an Triphenylphosphinoxid beträgt 0,01 bis 2,3 %, vorzugsweise 0,5 bis 1,2 %.

Bei der Herstellung der Epoxidharzkomponente (aus der Reaktionsharzmischung von Polyepoxidharz und Polyisocyanatharz) beträgt die Konzentration an Triphenylphosphinoxid 0,05 bis 10 %, vorzugsweise 2 bis 5 %. Das Polyepoxidharz ist vorteilhaft ein difunktionelles Epoxidharz. Das Molverhältnis der Epoxidgruppen zu den Isocyanatgruppen beträgt 1,1 bis 4, vorzugsweise 1,8 bis 3.

Die Herstellung der Epoxidharzkomponente kann portionsweise in Duplexknetern oder besonders vorteilhaft kontinuierlich in entsprechend ausgelegten Reaktionsextrudern erfolgen. Vor der Weiterverarbeitung wird die Epoxidharzkomponente pulverisiert. Vorteilhaft kann diese Komponente zusätzlich noch festes, pulverförmiges Epoxidharz enthalten, vorzugsweise bis zu 20 Masse-%.

Zur Herstellung der Epoxidharzformmassen wird der Epoxidharzkomponente eine phenolische Härterkomponente zugesetzt. Das Verhältnis der phenolischen Hydroxylgruppen zu den Epoxidgruppen beträgt dabei vorteilhaft 0,5 bis 1,1 und vorzugsweise 0,7 bis 0,9. Die Epoxidharzformmassen enthalten ferner anorganischen Füllstoff und übliche Zusatzstoffe. Der Massegehalt an anorganischem Füllstoff beträgt im allgemeinen 60 bis 90 %, vorzugsweise 70 bis 85 %. Die Zusatzstoffe, wie Formtrennmittel und Verarbeitungshilfen, werden in den üblichen geringen Konzentrationen zugesetzt. Die Zugabe eines Härtungsbeschleunigers ist im allgemeinen nicht erforderlich, da der in der Epoxidharzkomponente enthaltene Reaktionsbeschleuniger auch bei der Härtung wirksam ist und somit in der Formmasse als Härtungsbeschleuniger dienen kann.

Als Polyepoxidharz eignen sich insbesondere difunktionelle Epoxidharze, wie Bisphenol-A- und Bisphenol-F-Epoxidharze, Biphenylbisglycidylharze, Naphthylbisglycidylharze und Hexahydrophthalsäurebisglycidylester. Ferner können höherfunktionelle Epoxidharze, wie Kresol- und Phenolnovolak-Epoxidharze, aber auch Epoxidharze auf der Basis von Tetraglycidyldiaminodiphenylmethan, Triglycidylisocyanurat, Polyglycidyldinaphthylmethan und Triglycidyltriphenylmethan eingesetzt werden. Mit Hilfe dieser Epoxidharze läßt sich insbesondere eine Anhebung der Glasübergangstemperatur der Formstoffe erreichen. Die difunktionellen Epoxidharze können einzeln oder in Form von Gemischen eingesetzt werden, wobei in Gemischen auch mit Isocyanuratstrukturen modifizierte Siliconepoxidharze Verwendung finden können (siehe dazu EP-PS 0 399 199). Die difunktionellen Epoxidharze oder entsprechende Gemische können ferner zusammen mit höherfunktionellen Epoxidharzen zum Einsatz gelangen.

Als Polyisocyanatharz sind insbesondere Diisocyanatodiphenylmethan, Toluylendiisocyanat und Naphthylendiisocyanat sowie deren Isomerengemische und polymere Isomerengemische von Diisocyanatodiphenylmethan geeignet. Ferner kommt als Polyisocyanatharz auch trimeres Toluylendiisocyanat in Frage.

Als Reaktionsbeschleuniger dienen vorzugsweise 1,8-Diazabicyclo[5.4.0]undecen-7 (DBU) und substituierte Imidazole, insbesondere 1-Methylimidazol, 2-Methylimidazol, 2-Phenylimidazol, 2-Ethyl-4-methylimidazol, 1-Benzyl-2-phenylimidazol und 1-Cyanoethyl-2-phenylimidazol. Weiterhin sind substituierte Phosphine, wie Triphenylphosphin, und tertiäre Amine, wie 1,4-Diazabicyclo[2.2.2]octan (DABCO), geeignet.

Als Härterkomponente mit wenigstens zwei phenolischen Hydroxylgruppen pro Molekül eignen sich insbesondere Phenolnovolake, Kresolnovolake, Biphenylole und alkylphenolmodifizierte Silicone oder Mischungen davon.

Als Füllstoff dient vorzugsweise mineralisches Quarzgut, insbesondere mit splittriger und/oder sphärischer Kornform unterschiedlicher Korngrößenverteilungen. Ebenfalls geeignet sind thorium- und uranfreie synthetische Quarzgutmehle sowie Wollastonit. Verwendbar sind aber auch keramische Füllstoffe, wie Aluminumoxid, und faserförmige Füllstoffe, wie Kurzglasfasern. Die Füllstoffe können einzeln oder in Mischungen verwendet werden.

Als Zusatzstoffe werden übliche Verarbeitungshilfsmittel, wie interne Formtrennmittel, beispielsweise Montanwachs, mikronisierte Polyethylene, Carnaubawachs und Metallsalze der Stearinsäure, und Pigmente zum Einfärben der Werkstoffe, beispielsweise Ruß oder Titandioxid, verwendet.

Die Herstellung der Epoxidharzformmassen nach der Erfindung (mit halogenfreiem Flammschutz) erfolgt durch Mischen der pulverförmigen Komponenten - entsprechend der Rezepturanteile - in geeigneten Mischeinrichtungen. Die Mischungen werden dann in einem weiteren Verarbeitungsschritt auf einem Walzenstuhl oder durch Extrusion, beispielsweise mit einem gleichsinnig laufenden Zweischneckenkneter, im Schmelzzustand der Harz- und Härterkomponente zur Epoxidharzformmasse homogenisiert und anschließend nach üblichen Verfahren pulverisiert und tablettiert. Die Umhüllung von elektronischen Bauelementen erfolgt im Spritz-Preß-Verfahren, angepaßt an die jeweilige Technologie, im Temperaturbereich zwischen 170 und 190°C bei einer Spritz- und Härtezeit in der Form von 60 bis 180 s.

Anhand von Ausführungsbeispielen soll die Erfindung noch näher erläutert werden.

### Beispiele 1 bis 8

### Herstellung von prepolymeren Epoxidharzkomponenten

Das in Tabelle 1 angegebene Polyepoxidharz bzw. -gemisch wird aufgeschmolzen und in den Trog eines Duplexkneters mit verschleißarmen Knetschaufeln gegeben. Anschließend werden die in Tabelle 1 angegebenen Masseteile an Reaktionsbeschleuniger, Triphenylphosphinoxid und gegebenenfalls Zusatzstoff (Montanwachs) zugegeben, und dann wird bei Raumtemperatur gemischt. Dieser Mischung werden die in Tabelle 1 angegebenen Masseteile an Polyisocyanatharz zugesetzt und 5 min bei Raumtemperatur eingemischt, dann wird die Mischung aufgeheizt. Dies erfolgt über den Heizmantel des Duplexkneters, in den über ein Dreiwegeventil ein in einem Thermostat auf 225°C vorgeheiztes Wärmeträgermedium gepumpt wird. Innerhalb von 45 bis 75 s wird die Masse fest und schmilzt dann nach ca. 10 min wieder auf. Während der gesamten Reaktionszeit wird die Masse durch die Knetschaufeln bewegt. Wenn die Masse wieder aufgeschmolzen ist, wird der Heizkreislauf unterbrochen und der Trog auf ein gekühltes Aluminiumblech entleert. Die dabei erhaltene prepolymere Epoxidharzkomponente wird dann für die Weiterverarbeitung zu Pulver gemahlen. Als Kennwert der prepolymeren Epoxidharzkomponente dient der Epoxidwert, bestimmt nach Butanon-2/HCl-Zugabe durch potentiometrische Rucktitration nach DIN 16945 (siehe Tabelle 1). Die prepolymere Epoxidharzkomponente wird bei Raumtemperatur unter Ausschluß von Feuchtigkeit gelagert.

### Beispiele 9 und 10

### Herstellung von prepolymeren Epoxidharzkomponenten durch Reaktionsextrusion

Die Herstellung erfolgt jeweils mit der 60fachen Menge (in Gramm) der in Tabelle 1 angegebenen Masseteile der einzelnen Komponenten. Dazu wird in einem thermostatisierbaren und evakuierbaren Mischbehälter Polyepoxidharz gemischt und die Mischung dann unter Rühren bei vermindertem Druck auf 120°C erwärmt. Nachfolgend wird der Mischung Triphenylphosphinoxid portionsweise unter Rühren zugesetzt. Nachdem das Triphenylphosphinoxid vollständig gelöst ist, wird auf 25°C abgekühlt und gleichzeitig unter vermindertem Druck (< 1 mbar) entgast. In die kalte Masse wird der Reaktionsbeschleuniger eingetragen. Nach dem Homogenisieren wird die Mischung bei 25°C durch eine Zahnradpumpe mit einem kontinuierlichen Massefluß von 2,6 kg/h einem gleichsinnig laufenden Zweischneckenkneter zugeführt. Gleichzeitig werden in den Zweischneckenkneter mit einer Schlauchpumpe 0,65 kg/h Polyisocyanatharz (Beispiel 9) bzw. 0,705 kg/h (Beispiel 10) eindosiert. Die Schnecken des Kneters sind ausschließlich aus Förderelementen aufgebaut. Die Schneckenlänge beträgt 1080 mm, der äußere Schneckendurchmesser 31,8 mm; die sieben Zylinderzonen des Kneters sind auf 200°C geheizt. Die Schneckendrehzahl beträgt 20 min⁻¹, wodurch sich eine Masseverweilzeit im Zweischneckenkneter von 3 min ergibt.

Das Extrudat wird mit einer Massetemperatur von 190°C ausgetragen, durch unmittelbaren Kontakt mit einer gekühlten Abgleitschiene auf 50°C abgekühlt und auf einem angeschlossenen elastischen Abzugsband durch eine Gegenrolle granuliert. Die dabei anfallende Masse wird dann bei Raumtemperatur mittels einer Feinprallmühle mit Mahlbahn und Siebeinlage auf eine Korngröße < 200 µm gemahlen und gesichtet. Die erhaltene rieselfähige, latent reaktive, härtbare, prepolymere Epoxidharzkomponente wird bei Raumtemperatur unter Ausschluß von Feuchtigkeit gelagert. Der Epoxidwert der Epoxidharzkomponenten ist in Tabelle 1 aufgeführt.

### Beispiele 11 bis 19

### Herstellung von Epoxidharzformmassen (Epoxidharzpreßmassen)

In einem Kegelstumpfmischer werden zu jeweils 120 g der prepolymeren Epoxidharzkomponenten 1 bis 7, 9 und 10 die entsprechenden Mengen an pulverisierter Härterkomponente, Füllstoff und Zusatzstoff (Ruß) gegeben, bezogen auf die in Tabelle 2 angegebenen Masseteile der Epoxidharzkomponente (EP-Komponente). Anschließend wird 30 min intensiv gemischt und die erhaltene Mischung auf einem Walzenstuhl bei Temperaturen zwischen 80 und 100°C unter Aufschmelzen innerhalb vor 2 bis 3 min zur Epoxidharzformmasse homogenisiert. Die erkaltete Masse wird zerkleinert und zu Tabletten mit einer Masse von 60 g verpreßt. Der Gehalt der Formmassen an Triphenylphosphinoxid bzw. Phosphor ist Tabelle 2 zu entnehmen.

### Beispiel 20

### Herstellung einer Epoxidharzformmasse (Epoxidharzpreßmasse)

Zu 120 g der prepolymeren Epoxidharzkomponente 8 werden in einem Kegelstumpfmischer ein zusätzliches Epoxidharz (20,4 g), pulverisierter Härter (43,3 g), Füllstoff (300,8 g + 128,9 g) und Zusatzstoff (6,2 g Ruß und 3,1 g Montanwachs) gegeben. Anschließend wird 30 min intensiv gemischt und die erhaltene Mischung auf einem Walzenstuhl bei Temperaturen zwischen 80 und 100°C unter Aufschmelzen innerhalb von 2 bis 3 min zur Epoxidharzformmasse homogenisiert. Die erkaltete Masse wird zerkleinert und zu Tabletten mit einer Masse von 60 g verpreßt. Der Gehalt der Formmasse an Triphenylphospinoxid bzw. Phosphor ist Tabelle 2 zu entnehmen.

### Beispiele 21 bis 27

### Herstellung von Formstoffprüfkörpern

Die tablettierten Epoxidharzformmassen 11, 13, 15 bis 18 und 20 werden im Spritz-Preß-Verfahren (transfer molding) zu Formstoffplatten der Abmessungen 150 x 90 x 1,6 mm³ verarbeitet. Dazu wird jeweils die mittels Hochfrequenzheizung auf 90°C vorgewärmte Epoxidharzformmasse mit einem Druck von 100 bar in die auf 175°C aufgeheizte Form gespritzt. Die Formschließzeit (Spritzzeit und Härtezeit in der Form) beträgt 90 s. Die Platten werden dann 4 h bei 190°C nachgehärtet. Aus den Formstoffplatten werden mit einer Diamantdrahtsäge die für die Werkstoffprüfungen erforderlichen Probekörper geschnitten.

In Tabelle 3 sind die Verarbeitungseigenschaften der Epoxidharzformmassen und wesentliche Werkstoffeigenschaften der Epoxidharzformstoffe zusammengestellt. Die Viskosität der Epoxidharzformmassen wird mit einer Platte-Kegel-Einrichtung (Rotovisko, Fa. Haake) bei 175°C bestimmt. Als Maß für die Reaktivität der Form- bzw. Preßmassen wird die Zeit bestimmt, die erforderlich ist, um bei 175°C einen Viskositätsanstieg auf 500 Pa·s zu erreichen. Unmittelbar nach der Entformung wird die Shore-D-Härte (DIN 53505) der 175°C heißen Formstoffplatten gemessen. Für die Ermittlung der Flammwidrigkeit wird die Brennbarkeitsprüfung an Probekörpern von 1,6 mm Schichtstärke nach UL 94 V durchgeführt. Die Glasübergangstemperatur (T_{G}) der Formstoffe wird mittels thermomechanischer Analyse bestimmt, in gleicher Weise erfolgt die Bestimmung der linearen thermischen Ausdehnungskoeffizienten (α₁ und α₂) unterhalb bzw. oberhalb der Glasübergangstemperatur.

### Beispiel 28

### Umhüllung von elektronischen Bauelementen

Zur Umhüllung von elektronischen Bauelementen in Form von auf Systemträgern montierten integrierten Schaltungen werden die Epoxidharzformmassen unter einem Druck von 6 bis 10 t/cm² zu Tabletten mit einem Durchmesser von 50 mm und einer Masse von 50 g gepreßt. Die Tabletten werden mit einer Hochfrequenzheizung auf 90°C vorgewärmt und dann in eine auf 180°C vorgeheizte Form für Gehäuse P-DIP-14 (Plastic Dual Inline Package) gespritzt, in die ein Systemträgerband mit sieben montierten integrierten Schaltungen eingelegt ist; der Spritzdruck beträgt 70 bar, die Spritzzeit und die Härtezeit in der Form 120 s. Danach werden die umhüllten Bauelemente aus der Form entnommen und 4 h bei 190°C nachgehärtet. Anschließend werden die Bauelemente vereinzelt, und dann werden die üblichen weiteren Prozeßschritte der Endmontage durchgeführt. Bei der Umhüllung der elektronischen Bauelemente wird im übrigen kein externes Formtrennmittel eingesetzt.

### Legende zu den Tabellen

### Polyepoxidharz

- EP 1:: Bisphenol-A-bisglycidylether, Epoxidwert: 5,78 mol/kg
- EP 2:: Bisphenol-F-bisglycidylether, Epoxidwert: 6,18 mol/kg
- EP 3:: Tetraglycidyldiaminodiphenylmethan, Epoxidwert: 8,76 mol/kg
- EP 4:: Biphenylglycidylharz, Epoxidwert: 5,30 mol/kg
- EP 5:: Siliconepoxidharz, Epoxidwert: 1,50 mol/kg

### Polyisocyanatharz

- IC 1:: Diphenylmethandiisocyanat (Isomerengemisch), Isocyanatwert: 8,00 mol/kg
- IC 2:: Toluylendiisocyanat (Isomerengemisch), Isocyanatwert: 11,50 mol/kg

### Härter

- H 1:: Kresolnovolak, Hydroxylwert: 7,95 mol/kg
- H 2:: Phenolnovolak, Hydroxylwert: 8,90 mol/kg

### Reaktionsbeschleuniger

- RB 1:: 2-Phenylimidazol
- RB 2:: 1,8-Diazabicyclo[5.4.0]undecen-7 (DBU)

### Füllstoff

- F 1:: Quarzgut, sphärisch
- F 2:: Quarzgut, splittrig

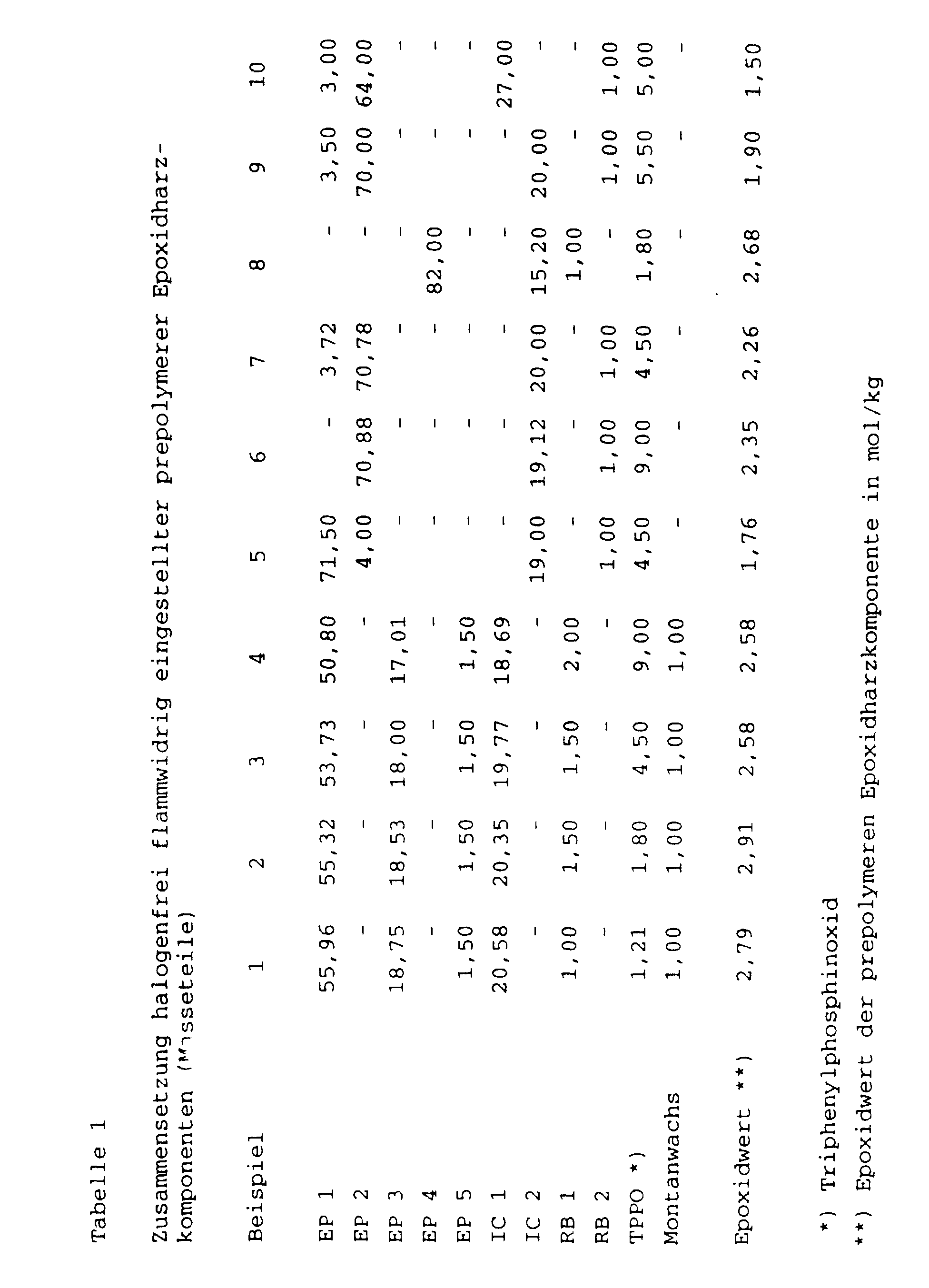

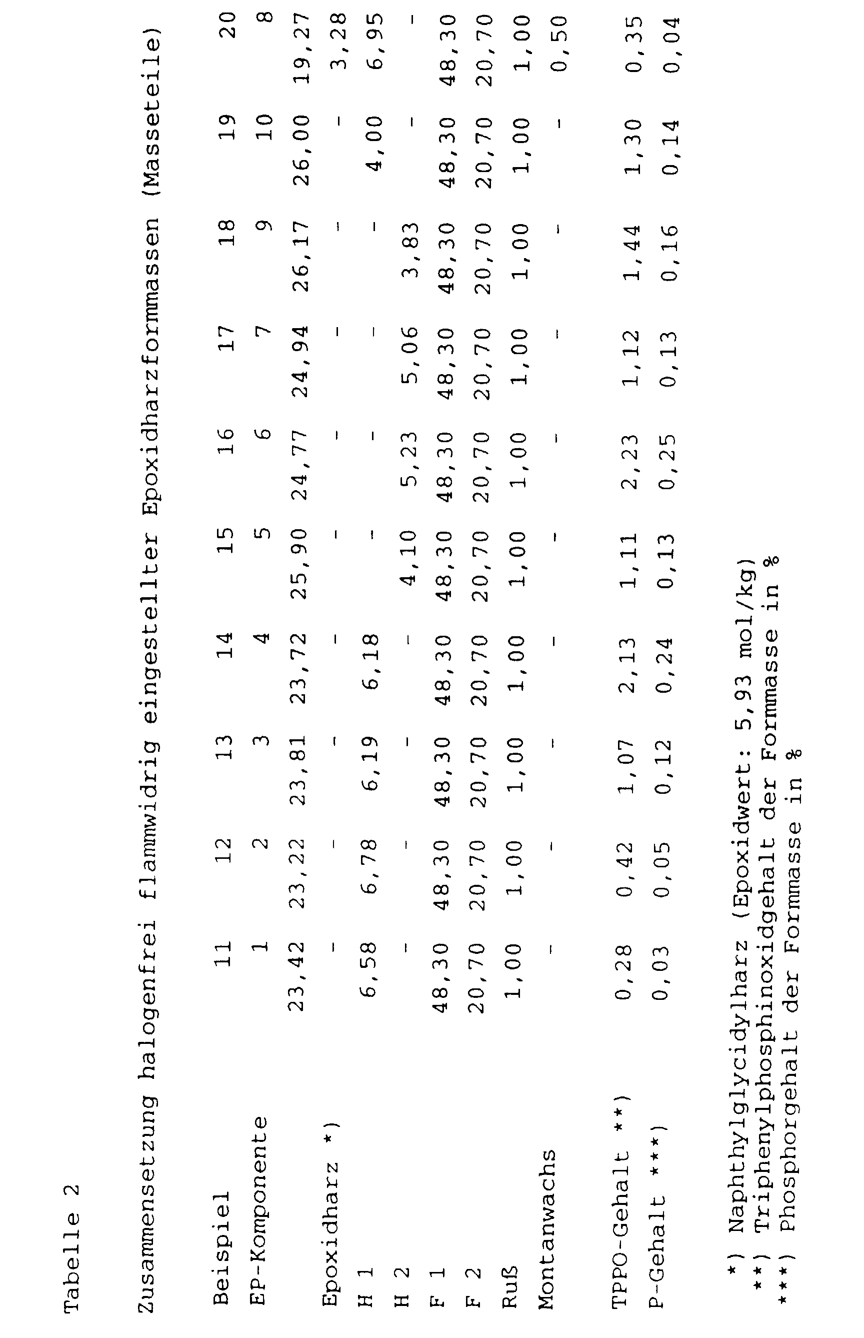

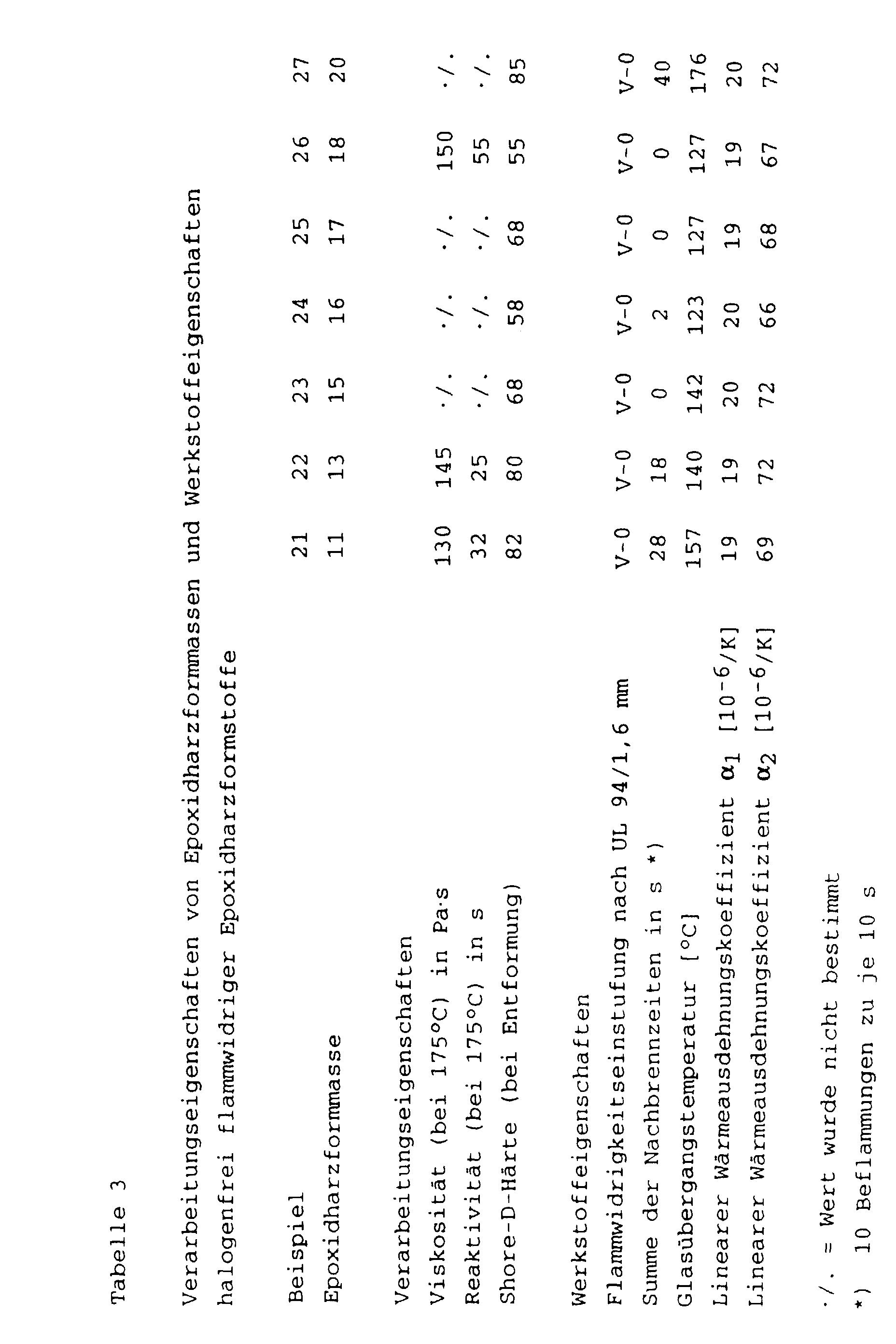

## Patentansprüche

1. Flammwidrig eingestellte, rieselfähige, latent reaktive, phenolisch härtbare Epoxidharzformmassen zur Umhüllung von elektronischen Bauelementen, **gekennzeichnet** durch
- eine Epoxidharzkomponente, erhalten aus einer lösungsmittelfreien Reaktionsharzmischung von Polyepoxidharz und Polyisocyanatharz mit einem Molverhältnis der Epoxidgruppen zu den Isocyanatgruppen von 1,1:1 bis 4:1 bei einer Reaktionstemperatur bis zu 220°C in Gegenwart eines Reaktionsbeschleunigers in einer Konzentration von 0,5 bis 2,5 % und unter Verwendung von Triphenylphosphinoxid in einer Konzentration von 0,05 bis 10 %, jeweils bezogen auf die Reaktionsharzmischung
- eine Härterkomponente mit mindestens zwei phenolischen Hydroxylgruppen pro Molekül
- anorganischen Füllstoff
- und übliche Zusatzstoffe.

2. Epoxidharzformmassen nach Anspruch 1, **dadurch gekennzeichnet,** daß das Polyepoxidharz ein difunktionelles Epoxidharz ist.

3. Epoxidharzformmassen nach Anspruch 1 oder 2, **dadurch gekennzeichnet ,** daß die Konzentration von Triphenylphosphinoxid, bezogen auf die Reaktionsharzmischung, 2 bis 5 % beträgt.

4. Epoxidharzformmassen nach einem der Ansprüche 1 bis 3, **dadurch gekennzeichnet,** daß die Epoxidharzkomponente zusätzlich ein festes Epoxidharz enthält, vorzugsweise bis zu 20 Masse-%.

5. Epoxidharzformmassen nach einem oder mehreren der Ansprüche 1 bis 4, **dadurch gekennzeich** **net,** daß das Molverhältnis der Epoxidgruppen zu den Isocyanatgruppen 1,8:1 bis 3:1 beträgt.

6. Epoxidharzformmassen nach einem oder mehreren der Ansprüche 1 bis 5, **dadurch gekennzeichnet,** daß das Molverhältnis der phenolischen Hydroxylgruppen der Härterkomponente zu den Epoxidgruppen der Epoxidharzkomponente 0,5:1 bis 1,1:1 beträgt, vorzugsweise 0,7:1 bis 0,9:1.

7. Epoxidharzformmassen nach einem oder mehreren der Ansprüche 1 bis 6, **dadurch gekennzeichnet** , daß die Härterkomponente ein Phenol- oder Kresolnovolak ist.

8. Epoxidharzformmassen nach einem oder mehreren der Ansprüche 1 bis 7, **dadurch gekennzeichnet,** daß der Massegehalt an anorganischem Füllstoff 60 bis 90 % beträgt, vorzugsweise 70 bis 85 %.

9. Epoxidharzformmassen nach einem oder mehreren der Ansprüche 1 bis 8, **dadurch gekennzeichnet,** daß der Füllstoff Quarzgut ist.

10. Epoxidharzformmassen nach einem oder mehreren der Ansprüche 1 bis 9, **dadurch gekennzeichnet,** daß der Reaktionsbeschleuniger ein substituiertes Imidazol oder 1,8-Diazabicyclo[5.4.0]undecen-7 ist.

## Claims

1. Flame-resistantly formulated, flowable, latently reactive, phenolically curable epoxy-resin moulding compounds for the encapsulation of electronic components, characterized by
- an epoxy-resin component obtained from a solvent-free reaction resin mixture of polyepoxy resin and polyisocyanate resin having a molar ratio of the epoxy groups to the isocyanate groups of 1.1:1 to 4:1 at a reaction temperature of up to 220°C in the presence of a reaction accelerator in a concentration of 0.5 to 2.5% and using triphenylphosphine oxide in a concentration of 0.05 to 10%, relative in each case to the reaction resin mixture,
- a curing agent component containing at least two phenolic hydroxyl groups per molecule,
- inorganic filler
- and standard additives.

2. Epoxy-resin moulding compounds according to Claim 1, characterized in that the polyepoxy resin is a difunctional epoxy resin.

3. Epoxy-resin moulding compounds according to Claim 1 or 2, characterized in that the concentration of triphenylphosphine oxide, relative to the reaction resin mixture, is 2 to 5%.

4. Epoxy-resin moulding compounds according to one of Claims 1 to 3, characterized in that the epoxy-resin component additionally contains a solid epoxy resin, preferably up to 20% by mass.

5. Epoxy-resin moulding compounds according to one or more of Claims 1 to 4, characterized in that the molar ratio of the epoxy groups to the isocyanate groups is 1.8:1 to 3:1.

6. Epoxy-resin moulding compounds according to one or more of Claims 1 to 5, characterized in that the molar ratio of the phenolic hydroxyl groups of the curing agent component to the epoxy groups of the epoxy-resin component is 0.5:1 to 1.1:1, preferably 0.7:1 to 0.9:1.

7. Epoxy-resin moulding compounds according to one or more of Claims 1 to 6, characterized in that the curing agent compound is a phenol novolak or a cresol novolak.

8. Epoxy-resin moulding compounds according to one or more of Claims 1 to 7, characterized in that the content by mass of inorganic filler is 60 to 90%, preferably 70 to 85%.

9. Epoxy-resin moulding compounds according to one or more of Claims 1 to 8, characterized in that the filler is fused silica.

10. Epoxy-resin moulding compounds according to one or more of Claims 1 to 9, characterized in that the reaction accelerator is a substituted imidazole or 1,8-diazabicyclo[5.4.0]undec-7-ene.

## Revendications

1. Matières moulables en résine époxyde, ignifugées, à écoulement libre, à réactivité latente et durcissables phénoliquement pour le revêtement de composants électroniques, caractérisées par
- une composante de résine époxyde, obtenue à partir d'une composition de résine de réaction, exempte de solvants, de résine polyépoxyde et de résine polyisocyanate avec un rapport molaire des groupes époxydes aux groupes isocyanates de 1,1 : 1 à 4 : 1 à une température de réaction jusqu'à 220 °C en présence d'un accélérateur de réaction en une concentration de 0,5 à 2,5 % et en utilisant de l'oxyde de triphénylphosphine en une concentration de 0,05 à 10 %, respectivement par rapport à la composition de résine de réaction
- une composante de durcissement avec au moins deux groupes hydroxyles phénoliques par molécule
- une matière de charge inorganique
- et des additifs courants.

2. Matières moulables en résine époxyde selon la revendication 1, caractérisées en ce que la résine polyépoxyde est une résine époxyde difonctionnelle.

3. Matières moulables en résine époxyde selon la revendication 1 ou 2, caractérisées en ce que la concentration en oxyde de triphénylphosphine, par rapport à la composition de résine de réaction, vaut 2 à 5 %.

4. Matières moulables en résine époxyde selon l'une des revendications 1 à 3, caractérisées en ce que la composante de résine époxyde contient en outre une résine époxyde solide, de préférence jusqu'à 20 % massiques.

5. Matières moulables en résine époxyde selon une ou plusieurs des revendications 1 à 4, caractérisées en ce que le rapport molaire des groupes époxydes aux groupes isocyanates vaut 1,8 : 1 à 3 : 1.

6. Matières moulables en résine époxyde selon une ou plusieurs des revendications 1 à 5, caractérisées en ce que le rapport molaire des groupes hydroxyles phénoliques de la composante de durcissement aux groupes époxydes de la composante de résine époxyde vaut 0,5 : 1 à 1,1 : 1, de préférence 0,7 : 1 à 0,9 : 1.

7. Matières moulables en résine époxyde selon une ou plusieurs des revendications 1 à 6, caractérisées en ce que la composante de durcissement est une novolaque phénolique ou une novolaque crésolique.

8. Matières moulables en résine époxyde selon une ou plusieurs des revendications 1 à 7, caractérisées en ce que la teneur massique en matière de charge inorganique vaut 60 à 90 %, de préférence 70 à 85 %.

9. Matières moulables en résine époxyde selon une ou plusieurs des revendications 1 à 8, caractérisées en ce que la matière de charge est de la silice vitreuse.

10. Matières moulables en résine époxyde selon une ou plusieurs des revendications 1 à 9, caractérisées en ce que l'accélérateur de réaction est de l'imidazole substitué ou du 1,8-diazabicyclo[5.4.0]undéc-7-ène.
